# EUROPÄISCHE PATENTSCHRIFT

(11) **EP 2 601 728 B1**
(45) Veröffentlichungstag und Bekanntmachung des Hinweises auf die Patenterteilung: **13.08.2014**
(21) Anmeldenummer: 11754340.5
(22) Anmeldetag: 29.08.2011
(51) Int. Cl.: H02K 1/27, H02K 21/14, H02K 7/18

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 08.09.2010 DE 102010040400
(43) Veröffentlichungstag der Anmeldung: 12.06.2013
(73) Patentinhaber: Siemens Aktiengesellschaft, 80333 München (DE)
(72) Erfinder: ERD, Ludwig, 10559 Berlin (DE); MÖHLE, Axel, 12163 Berlin (DE)
(86) Internationale Anmeldenummer: PCT/EP2011/064787
(87) Internationale Veröffentlichungsnummer: WO 2012/031923

(56) Entgegenhaltungen:
- EP-A1- 2 348 619
- EP-A2- 1 427 088
- EP-A2- 1 860 755
- DE-U1-202008 013 303
- JP-A- 11 089 141
- US-A- 5 831 365
- US-A1- 2004 088 852

## Beschreibung

Bei elektrischen Maschinen mit Permanenterregung und am Luftspalt angeordneten Permanentmagneten ist die Haltekraft der Permanentmagnete am Rotorkörper für die Betriebssicherheit der Maschine von ausschlaggebender Bedeutung. Bisherige Befestigungslösungen beruhen auf mechanischen Verbindungen oder Klebeverbindungen. Dabei werden die in der Regel ebenen Permanentmagnete oder Magnetsysteme (bestehend aus einer Grundplatte und darauf befestigten Permanentmagneten) auf den Rotorkörper geschraubt, verklammert oder geklebt, da die magnetischen Haltekräfte allein nicht ausreichend sind, um die Permanentmagnete unter allen Betriebsbedingungen sicher am Rotorkörper zu halten.

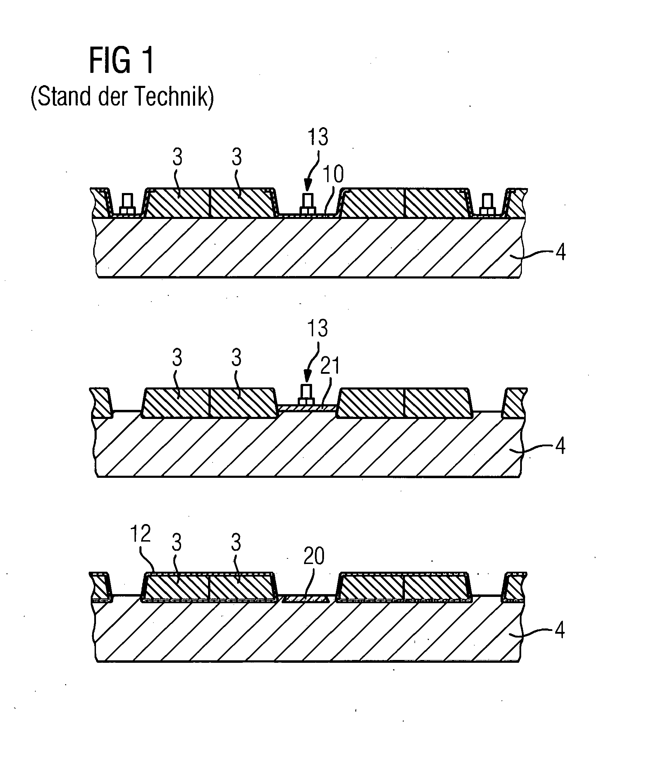

In FIG 1 sind aus dem Stand der Technik bekannte.Befestigungslösungen dargestellt. In der obersten Darstellung in FIG 1 sind dabei die Permanentmagnete 3 mittels geformter Bleche 10 und Setzbolzen/Nieten 13 mit dem Rotorkörper 4 verbunden. In der mittleren Darstellung in FIG 1 sind die Permanentmagnete 3 in im Rotorkörper 4 eingebrachte trapezförmige Nuten eingeschoben und solchermaßen am Rotorkörper 4 befestigt. Eine zusätzliche Befestigung der Permanentmagnete ist dabei über Setzbolzen/Nieten 13 und das Element 21 realisiert.

In der untersten Abbildung in FIG 1 sind die Permanentmagnete 3 in eine Hülle 12 eingebettet, wobei die Hülle 12 über eine Schwalbenschwanzverbindung mit dem Rotorkörper 4 verbunden ist. Über eine Klammer 20 wird zusätzlich Druck auf die Schwalbenschwanzverbindung ausgeübt, um die Befestigung der Permanentmagnete zusätzlich zu erhöhen.

Im Stand der Technik sind verschiedene Ausgestaltungen von Rotoren elektrischer Maschinen bekannt. Rein beispielhaft wird auf folgende Dokumente verwiesen:
- EP 1 427 088 A2,
- US 5 831 365 A,
- US 2004/088 852 A1,
- DE 20 2008 013 303 U1 und
- JP 11 089 141 A.

Im Stand der Technik wird eine Ausnehmung genutzt, um in die Ausnehmung einen Kleber einzubringen, mittels dessen die Permanentmagnete mit dem Rotorkörper verklebt werden. Alternativ dazu ist die Nutzung als Kanal für ein flüssiges Kühlmittel bekannt.

Es ist Aufgabe der Erfindung, einen Rotor für eine elektrische Maschine zu schaffen, bei dem die Permanentmagnete zuverlässig am Rotorkörper des Rotors gehalten werden und dennoch eine leichte Demontage der Permanentmagnete möglich ist.

Diese Aufgabe wird gelöst durch einen Rotor für eine elektrische Maschine, wobei der Rotor einen Rotorkörper aufweist, wobei am Umfang des Rotorkörpers Permanentmagnete angeordnet sind, wobei die von den Permanentmagneten abgedeckten Bereiche des Umfangs des Rotorkörpers mindestens eine Ausnehmung aufweisen und/oder die dem Umfang des Rotorkörpers zugewandte Seite der Permanentmagnete mindestens eine Ausnehmung aufweist, wobei infolge der Ausnehmungen die Auflagefläche, mit der die Permanentmagnete jeweilig auf dem Rotorkörper aufliegen, zwischen 20% und 85% der Seitenfläche der dem Umfang des Rotorkörpers zugewandten Seite der Permanentmagnete beträgt, wobei die Ausnehmung in Form einer Nut realisiert ist, wobei die Richtung der Nut parallel zur der dem Umfang des Rotorkörpers zugewandten Seite der Permanentmagneten verläuft, wobei in die Ausnehmungen zur Demontage der Permanentmagnete temporär ferromagnetische Stangen einführbar sind.

Es erweist sich als vorteilhaft, wenn infolge der Ausnehmungen die Auflagefläche, mit der die Permanentmagnete jeweilig auf dem Rotorkörper aufliegen, zwischen 45% und 55% der Seitenfläche der dem Umfang des Rotorkörpers zugewandten Seite der Permanentmagnete beträgt, da dann eine sehr große Erhöhung der magnetischen Haltekraft erreicht wird.

Weiterhin wird diese Aufgabe gelöst durch einen Rotor für eine elektrische Maschine, wobei der Rotor einen Rotorköper aufweist, wobei am Umfang des Rotorkörpers ferromagnetische Trägerelemente angeordnet sind, wobei an der dem Umfang des Rotorkörpers abgewandten Seite der Trägerelemente mindestens ein Permanentmagnet angeordnet ist, wobei die dem Umfang des Rotorkörpers zugewandte Seite der Trägerelemente mindestens eine Ausnehmung aufweist und/oder die dem Umfang des Rotorkörpers abgewandte Seite der Trägerelemente mindestens eine Ausnehmung aufweist, wobei infolge der Ausnehmungen die Auflagefläche, mit der die Trägerelemente jeweilig auf dem Rotorkörper aufliegen, zwischen 20% und 85% der Seitenfläche der dem Umfang des Rotorkörpers zugewandten Seite der Trägerelemente beträgt und/oder dass infolge der Ausnehmungen die Auflagefläche, mit der die Permanentmagnete jeweilig auf den Trägerelementen aufliegen, zwischen 20% und 85% der Seitenfläche der dem Umfang des Rotorkörpers abgewandten Seite der Trägerelemente beträgt, wobei die Ausnehmungen in Form einer Nut realisiert sind, wobei die Richtung der Nut parallel zur der dem Umfang des Rotorkörpers zugewandten Seite der Permanentmagneten verläuft, wobei in die Ausnehmungen zur Demontage der Permanentmagnete temporär ferromagnetische Stangen einführbar sind.

Ferner erweist sich als vorteilhaft, wenn infolge der Ausnehmungen die Auflagefläche, mit der die Trägerelemente jeweilig auf dem Rotorkörper aufliegen, zwischen 45% und 55% der Seitenfläche der dem Umfang des Rotorkörpers zugewandten Seite der Trägerelemente beträgt und/oder wenn infolge der Ausnehmungen die Auflagefläche, mit der die Permanentmagnete jeweilig auf den Trägerelementen aufliegen, zwischen 45% und 55% der Seitenfläche der dem Umfang des Rotorkörpers abgewandten Seite der Trägerelemente beträgt, da dann eine sehr große Erhöhung der magnetischen Haltekraft erreicht wird.

Ferner erweist es sich als vorteilhaft, wenn die Nut eine quadratische, rechteckförmige, runde, trapezförmige oder v-förmige Form aufweist, da diese Formen der Nut auf einfache Art und Weise realisiert werden können.

Die elektrische Maschine, die den Rotor aufweist, kann dabei als Elektromotor oder Generator und insbesondere als Windkraftgenerator ausgebildet sein. Sie weist vorzugsweise eine elektrische Leistung auf, die größer als 1 MW ist. Der Generator dient zur Erzeugung von elektrischer Energie. Der Windkraftgenerator kann dabei insbesondere als direkt angetriebener Windkraftgenerator ausgebildet sein.

Mehrere Ausführungsbeispiele der Erfindung sind in der Zeichnung dargestellt und werden im Folgenden näher erläutert. Dabei zeigen:
- FIG 1: aus dem Stand der Technik bekannte Befestigungsmöglichkeiten zur Befestigung der Permanentmagnete am Rotorkörper,
- FIG 2: eine elektrische Maschine in Form einer schematischen Darstellung,
- FIG 3: eine alternative Ausbildung des erfindungsgemäßen Rotors der elektrischen Maschine gemäß FIG 2 in Form einer schematisierten Darstellung,
- FIG 4: eine schematisierte Detailansicht einer Ausbildung der Erfindung,
- FIG 5: eine schematisierte Detailansicht einer weiteren Ausbildung der Erfindung,
- FIG 6: eine schematisierte Detailansicht einer weiteren Ausbildung der Erfindung,
- FIG 7: eine schematisierte Detailansicht einer weiteren Ausbildung der Erfindung,
- FIG 8: eine schematisierte Detailansicht einer weiteren Ausbildung der Erfindung,
- FIG 9: eine Darstellung der auftretenden Kräfte,
- FIG 10: ein Feldlinienbild,
- FIG 11: eine ferromagnetische Stange,
- FIG 12: eine weitere elektrische Maschine in Form einer schematisierten Darstellung,
- FIG 13: eine alternative Ausbildung des erfindungsgemäßen Rotors der elektrischen Maschine gemäß FIG 12 in Form einer schematisierten Darstellung,
- FIG 14: eine perspektivische Darstellung des in FIG 2 dargestellten Rotors in Form einer schematisierten Darstellung,
- FIG 15: die Seitenfläche der dem Umfang des Rotorkörpers zugewandte Seite der Permanentmagnete und
- FIG 16: die Seitenfläche der dem Umfang des Rotorkörpers zugewandten oder abgewandten Seite der Trägerelemente.

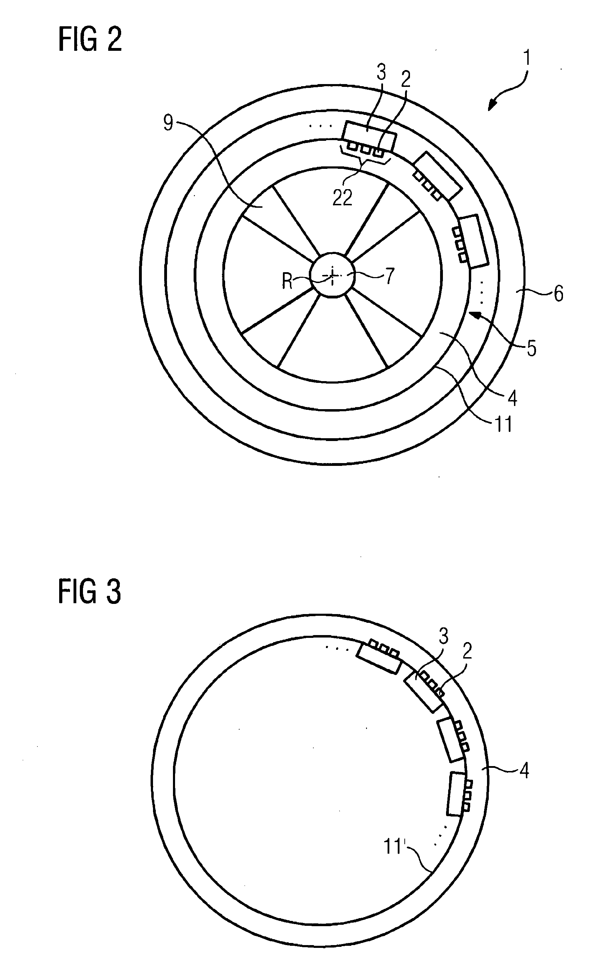

In FIG 2 ist in Form einer schematisierten Darstellung eine elektrische Maschine 1 dargestellt. Die elektrische Maschine 1 weist einen um eine Rotationsachse R rotierbar angeordneten Rotor 5 auf. Der Rotor weist einen Rotorkörper 4 auf, der über Verbindungselemente 9 mit einer Welle 7 verbunden ist. Der Rotorkörper kann dabei massiv ausgebildet sein oder in Form von in Richtung der Rotationsachse R des Rotors 5 hintereinander angeordneten Blechen bestehen. Weiterhin kann der Rotorkörper auch segmentiert ausgeführt sein. Der Rotor umfasst alle um die Rotationsachse R des Rotors 5 rotierbar angeordneten Elemente der Maschine.

Am Umfang 11 des Rotorkörpers 4 sind Permanentmagnete angeordnet, wobei der Übersichtlichkeit halber nur ein Permanentmagnet 3 mit einem Bezugszeichen versehen ist. Die Permanentmagnete sind dabei um den ganzen Umfang 11 des Rotorkörpers 4 angeordnet, was durch Punkte in FIG 2 dargestellt ist. Die Permanentmagnete verlaufen in Richtung der Rotationsachse R. Die von den Permanentmagneten abgedeckten Bereiche des Umfangs 11 des Rotorkörpers 4 weisen Ausnehmungen auf, wobei der Übersichtlichkeit halber in FIG 2 nur eine Ausnehmung 2 und nur ein von dem Permanentmagnet 3 abgedeckter Bereich 22 mit einem Bezugszeichen versehen ist. Die Ausnehmungen verlaufen in den Rotorkörper hinein.

Es sei an dieser Stelle angemerkt, dass bei allen im Rahmen der vorliegenden Anmeldung beschriebenen Ausführungsbeispielen der Erfindung die Ausnehmungen in Form von in Richtung der Rotationsachse R des Rotors verlaufenden Nuten realisiert sind, was nicht notwendigerweise so sein muss. Die Ausnehmungen können z.B. auch in Form von Bohrungen oder anders gestalteten Ausnehmungen vorhanden sein, die in den Umfang des Rotorkörpers 4 eingebracht wurden. Die Nuten verlaufen in Richtung der jeweiligen Nut parallel zu der dem Umfang des Rotorkörpers zugewandten Seite der Permanentmagnete. Die Nuten können z.B. so, bezogen auf den Umfang des Rotorkörpers, auch in tangentialer Richtung verlaufen. Die Nuten können dabei z.B. eine quadratische, rechteckförmige, runde, trapezförmige oder V-förmige Form aufweisen.

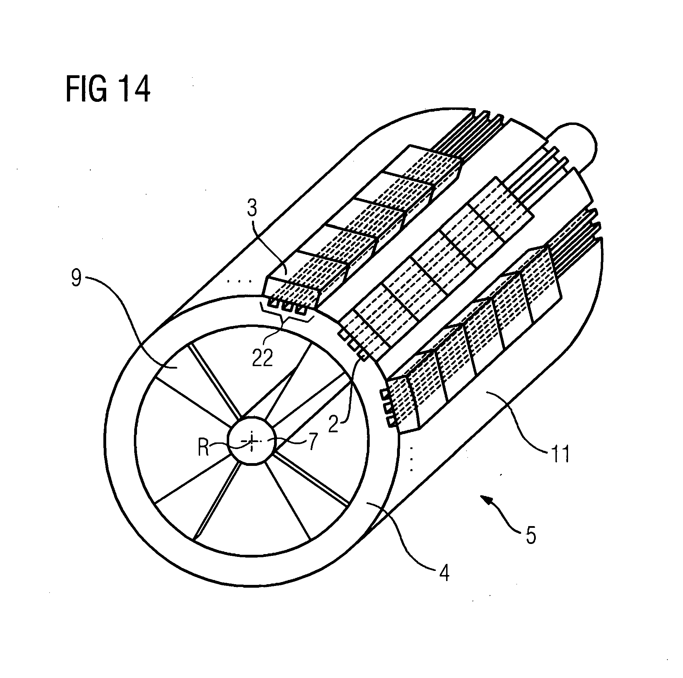

In FIG 14 ist der in FIG 2 dargestellte Rotor 5 in Form einer schematisierten perspektivischen Darstellung dargestellt, wobei in FIG 14 der Übersichtlichkeit halber nur einer der in Richtung der Rotationsachse R hintereinander angeordneten Permanentmagnete mit dem Bezugszeichen 3 versehen ist. Da der Rotor 5 der elektrischen Maschine 1 Permanentmagnete aufweist, handelt es sich bei der elektrischen Maschine 1 um eine sogenannte permanentmagneterregte elektrische Maschine. Zwischen dem Rotor 5 und dem Ständer 6 der elektrischen Maschine 1 ist ein Luftspalt vorhanden. Es sei an dieser Stelle angemerkt, dass der Übersichtlichkeit halber und weil zum Verständnis der Erfindung unwesentlich die elektrischen Spulen des Ständers 6 in FIG 2 nicht dargestellt sind. Die elektrische Maschine 1 ist im Rahmen des Ausführungsbeispiels gemäß FIG 2 als sogenannter Innenläufer ausgebildet, d.h. der ruhend angeordnete Ständer 6 ist um den im Zentrum der elektrischen Maschine 1 rotierbar angeordneten Rotor 5 angeordnet.

Wie in FIG 3 dargestellt, kann die elektrische Maschine 1 aber auch als sogenannter Außenläufer ausgebildet sein, d.h. der Rotor rotiert beim Betrieb der Maschine um den im Zentrum der Maschine ruhend angeordneten Ständer der Maschine. Der Übersichtlichkeit halber ist in FIG 3 nur der Rotorkörper 4 mit den an ihm angeordneten Permanentmagneten, bei einer Ausbildung der elektrische Maschine 1 als Außenläufer, dargestellt, wobei gleiche Elemente mit den gleichen Bezugszeichen versehen sind wie in FIG 2.

Bei einer Ausbildung der elektrischen Maschine als Innenläufer gemäß FIG 2 sind die Permanentmagnete am äußeren Umfang 11 des Rotorkörpers 4 angeordnet, während bei einer Ausbildung der elektrischen Maschine als Außenläufer gemäß FIG 3 die Permanentmagnete am inneren Umfang 11' des Rotorkörpers 4 angeordnet sind und die von den Permanentmagneten abgedeckten Bereiche des inneren Umfangs 11' des Rotorkörpers 4 Ausnehmungen aufweisen, von denen der Übersichtlichkeit halber nur eine Ausnehmung 2 mit einem Bezugszeichen versehen ist.

Der Umfang des Rotorkörpers kann somit in Form des äußeren Umfangs 11 des Rotorskörpers als auch in Form des inneren Umfangs 11' des Rotorkörpers vorliegen.

Die von den Permanentmagneten abgedeckten Bereiche des Umfangs 11 oder 11' weisen dabei im Rahmen der Ausführungsbeispiele eine ebene Oberfläche auf. Diese kann z.B. durch eine spanende Bearbeitung des Rotorkörpers, z.B. mittels eines Fräsers, hergestellt sein.

Es sei an dieser Stelle angemerkt, dass der Rotorkörper 4 massiv ausgebildet sein kann oder aus in Richtung der Rotationsachse R des Rotors 5 hintereinander angeordneten Blechen bestehen kann. Weiterhin kann der Rotorkörper 4 auch segmentiert ausgeführt sein. Der Rotorkörper besteht aus einem ferromagnetischen Material, wie z.B. einer ferromagnetischen Eisenlegierung.

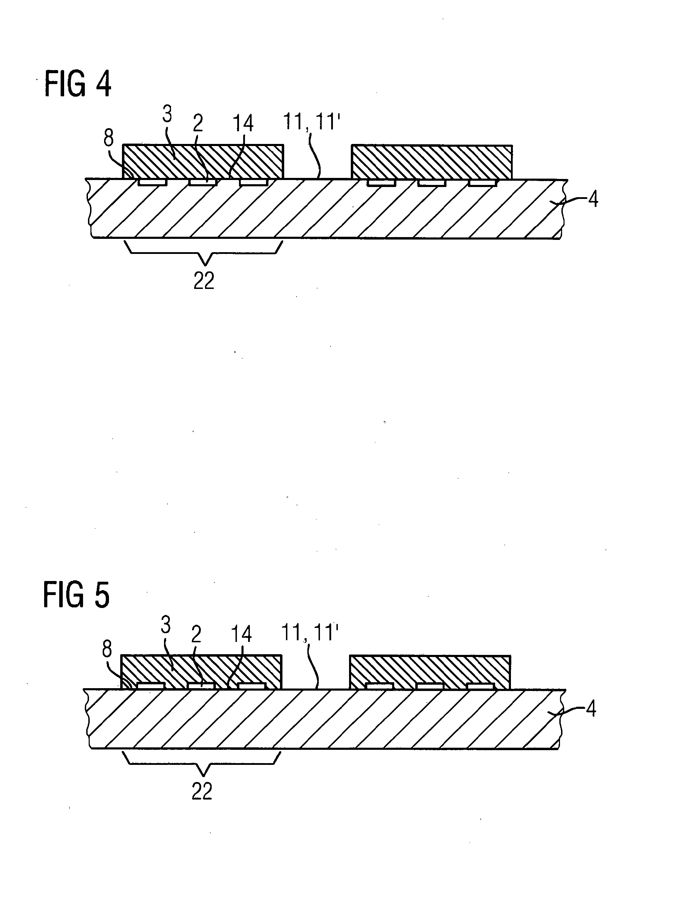

In FIG 4 ist in Form einer schematisierten Schnittansicht ein auf einer Ebene aufgerollter Ausschnitt des Rotorkörpers 4 mit den an seinem Umfang 11 oder 11' angeordneten Permanentmagneten dargestellt. Gleiche Elemente sind dabei in FIG 4 mit den gleichen Bezugszeichen versehen wie in FIG 2 und FIG 3. Die von den Permanentmagneten abgedeckten Bereiche des Umfangs des Rotorkörpers weisen Ausnehmungen auf. Die Ausnehmungen sind zwischen den Permanentmagneten und der Rotationsachse R angeordnet. Die Ausnehmungen sind in die umfangsseitige Oberfläche des Rotorkörpers 4 eingebracht. Die Ausnehmungen verlaufen in den Rotorkörper hinein. Die dem Umfang 11 oder 11' des Rotorkörpers 4 zugewandte Seite des Permanentmagneten ist in FIG 4 mit dem Bezugszeichen 8 versehen.

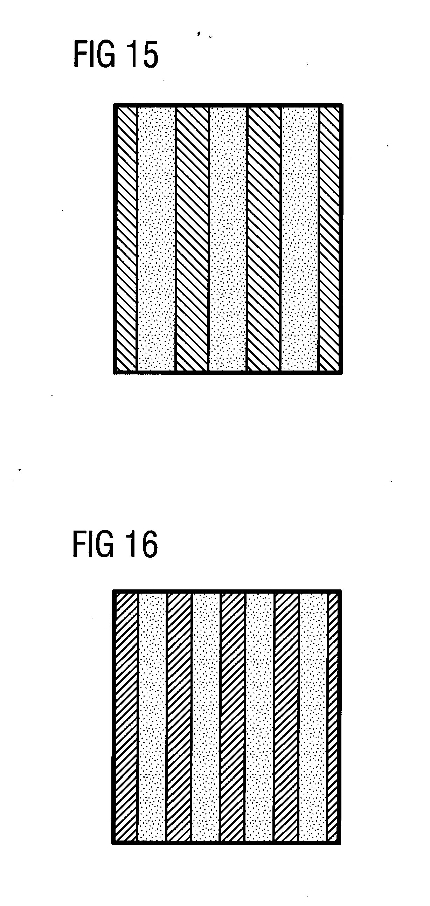

Die Ausnehmungen weisen einen höheren magnetischen Widerstand auf als der Rest der von den Permanentmagneten abgedeckten Bereiche des Umfangs 11 oder 11'. Dadurch weicht der magnetische Fluss auf die Auflagebereiche auf, an denen die Permanentmagnete auf der Oberfläche des Rotorkörpers 4 aufliegen, d.h. der magnetische Fluss verläuft im Wesentlichen bezogen auf FIG 4 links und rechts von den jeweiligen Ausnehmungen. In FIG 4 ist der Übersichtlichkeit halber nur der Auflagebereich 14 mit einem Bezugszeichen versehen. Da die magnetische Haltekraft, mit der die Permanentmagnete an dem ferromagnetischen Rotorkörper 4 haften, quadratisch mit der magnetischen Flussdichte steigt, erhöht sich trotz verminderter effektiver Auflagefläche der Permanentmagnete die magnetische Haltekraft signifikant. Durch diese deutliche Steigerung der Haltekraft kann auf zusätzliche mechanische Befestigungslösungen, wie sie z.B. eingangs beschrieben und in FIG 1 dargestellt sind, verzichtet werden, wodurch Montage und Fertigung des Rotors signifikant vereinfacht werden. Die magnetischen Haltekräfte sind somit durch die erfindungsgemäße Realisierung von Ausnehmungen zwischen den Permanentmagneten und dem Rotorkörper 4 gegenüber dem Stand der Technik stark erhöht, so dass die magnetische Verbindung zwischen den Permanentmagneten und dem Rotorkörper gegenüber dem Stand der Technik deutlich verstärkt und damit verbessert ist. Die Ausnehmungen weisen dabei eine derartige Größe auf, dass infolge der Ausnehmungen die Auflagefläche, mit der die Permanentmagnete jeweilig auf dem Rotorkörper 4 aufliegen, zwischen 20% und 85% der Seitenfläche der dem Umfang 11 oder 11' des Rotorkörpers 4 zugewandten Seite 8 der Permanentmagnete beträgt. Eine besonders hohe Erhöhung der Haltkraft ergibt sich, wenn die Ausnehmungen eine derartige Größe aufweisen, dass infolge der Ausnehmungen die Auflagefläche, mit der die Permanentmagnete jeweilig auf dem Rotorkörper 4 aufliegen, zwischen 45% und 55% der Seitenfläche der dem Umfang 11 oder 11' des Rotorkörpers 4 zugewandten Seite 8 der Permanentmagnete beträgt. In FIG 15 ist im Rahmen einer schematisierten Ansicht die Seitenfläche, der dem Umfang 11 oder 11' des Rotorkörpers 4 zugewandten Seite 8 des Permanentmagneten 3 dargestellt. Die Seitenfläche ist die von dem dick gezeichneten Rechteck umrandete Fläche. Die in FIG 15 punktiert dargestellten Flächen der Seitenfläche stehen infolge der auf Seite des Rotorkörpers und/oder auf Seite der Permanentmagnete vorhandenen Ausnehmungen nicht mehr als Auflagefläche zu Verfügung. Die Auflagefläche entspricht der Seitenfläche abzüglich der punktiert dargestellten Flächen. Die Auflagefläche ist in FIG 15 schraffiert dargestellt.

In FIG 5 ist ein weiteres Ausführungsbeispiel der Erfindung dargestellt, wobei gleiche Elemente mit den gleichen Bezugszeichen versehen sind wie in FIG 4. Bei dem Ausführungsbeispiel gemäß FIG 5 sind die Ausnehmungen nicht in den Umfang 11 oder 11' des Rotorkörpers 4 eingebracht wie bei FIG 4, sondern die dem Umfang 11 oder 11' des Rotorkörpers 4 zugewandte Seite 8 der Permanentmagnete weist die Ausnehmungen auf. Die Ausnehmungen verlaufen dabei in die Permanentmagnete hinein. Das Funktionsprinzip stimmt ansonsten mit dem Funktionsprinzip gemäß FIG 4 überein, so dass auch bei dieser Ausführung der Erfindung die magnetischen Haltekräfte gegenüber einer Ausführung der Permanentmagnete, die keine Ausnehmungen aufweisen, stark erhöht werden. Wie schon gesagt, weisen die Ausnehmungen dabei eine derartige Größe auf, dass infolge der Ausnehmungen die Auflagefläche, mit der die Permanentmagnete jeweilig auf dem Rotorkörper 4 aufliegen, zwischen 20% und 85% der Seitenfläche der dem Umfang 11 oder 11' des Rotorkörpers 4 zugewandten Seite 8 der Permanentmagnete beträgt. Eine besonders hohe Erhöhung der Haltkraft ergibt sich, wie schon gesagt, wenn die Ausnehmungen eine derartige Größe aufweisen, dass infolge der Ausnehmungen die Auflagefläche, mit der die Permanentmagnete jeweilig auf dem Rotorkörper 4 aufliegen, zwischen 45% und 55% der Seitenfläche der dem Umfang 11 oder 11' des Rotorkörpers 4 zugewandten Seite 8 der Permanentmagnete beträgt.

Weiterhin sei an dieser Stelle angemerkt, dass bezüglich der oben genannten Ausbildungen der Erfindung die Erfindung auch derart ausgebildet sein kann, dass sowohl die von den Permanentmagneten abgedeckten Bereiche des Umfangs des Rotorkörpers als auch die dem Umfang des Rotorkörpers zugewandte Seite der Permanentmagnete Ausnehmungen aufweisen. Wie schon gesagt, weisen die Ausnehmungen dabei eine derartige Größe auf, dass infolge der Ausnehmungen die Auflagefläche, mit der die Permanentmagnete jeweilig auf dem Rotorkörper 4 aufliegen, zwischen 20% und 85% der Seitenfläche der dem Umfang 11 oder 11' des Rotorkörpers 4 zugewandten Seite 8 der Permanentmagnete beträgt. Eine besonders hohe Erhöhung der Haltekraft ergibt sich, wie schon gesagt, wenn die Ausnehmungen eine derartige Größe aufweisen, dass infolge der Ausnehmungen die Auflagefläche, mit der die Permanentmagnete jeweilig auf dem Rotorkörper 4 aufliegen, zwischen 45% und 55% der Seitenfläche der dem Umfang 11 oder 11' des Rotorkörpers 4 zugewandten Seite 8 der Permanentmagnete beträgt.

Ferner sei an dieser Stelle angemerkt, dass die von den Permanentmagneten abgedeckten Bereiche des Umfangs des Rotorkörpers auch nur eine einzelne Ausnehmung aufweisen können und/ oder die dem Umfang des Rotorkörpers zugewandte Seite der Permanentmagnete auch nur eine einzelne Ausnehmung aufweisen kann.

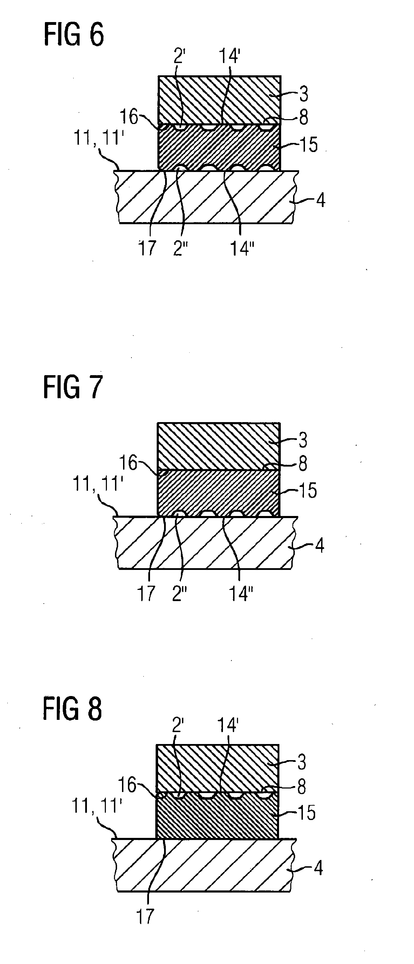

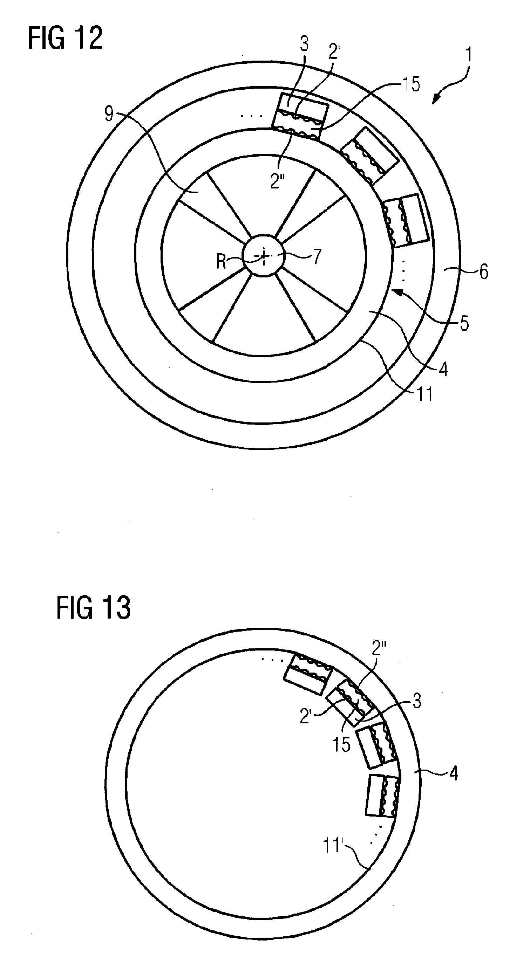

In FIG 6, FIG 12 und FIG 13 ist eine weitere Ausbildung der Erfindung dargestellt, wobei in den Figuren gleiche Elemente mit den gleichen Bezugszeichen versehen sind wie in den FIG 2 und FIG 3. Wie in FIG 13 dargestellt, kann auch bei dieser Ausbildung der Erfindung, wie bei allen anderen Ausbildungen der Erfindung, die Maschine 1 auch als Außenläufer ausgebildet sein. In FIG 6 ist in Form einer schematisierten Schnittansicht, die in FIG 12 und FIG 13 dargestellte Anbringung der Permanentmagnete an den Rotorkörper 4, am Beispiel des Permanentmagneten 3, dargestellt. Die Permanentmagnete sind bei dieser Ausführung der Erfindung über ferromagnetische Trägerelemente magnetisch mit dem Rotorkörper 4 verbunden, wobei in FIG 12 und FIG 13 nur ein Trägerelement 15 mit einem Bezugszeichen versehen ist. Die ferromagnetischen Trägerelemente sind zwischen den Permanentmagneten und dem Rotorkörper 4 angeordnet, wobei an der dem Umfang 11 oder 11' des Rotorkörpers 4 abgewandten Seite 16 der Trägerelemente ein einzelner oder mehrere Permanentmagnete angeordnet sind, wobei die den Umfang 11 oder 11' des Rotorkörpers 4 zugewandte Seite 17 der Trägerelemente Ausnehmungen aufweist und die dem Umfang 11 oder 11' des Rotors 4 abgewandte Seite 16 der Trägerelemente Ausnehmungen aufweist. Die Ausnehmungen verlaufen in die Trägerelemente hinein. Der Übersichtlichkeit halber sind in FIG 6 nur die Ausnehmungen 2' und 2" mit Bezugszeichen versehen. Die Ausnehmungen sind dabei, wie bei den übrigen Ausführungsbeispielen, im Rahmen der Ausführungsbeispiele in Form von Nuten realisiert, die parallel zu der dem Umfang des Rotorkörpers 4 zugewandten Seite 8 des Permanentmagneten verlaufen. Die Nuten können z.B. eine quadratische, rechteckförmige, runde, trapezförmige oder V-förmige Form aufweisen und verlaufen vorzugsweise in Richtung der Rotationsachse R des Rotors oder bezogen auf den Umfang 11 oder 11' des Rotorkörpers in tangentiale Richtung durch die Trägerelemente.

Das Funktionsprinzip ist dabei wieder dasselbe, wie bei den vorherigen Ausführungsbeispielen, beschrieben. Infolge der vorhandenen Ausnehmungen weicht der vom Permanentmagnet 3 erzeugte magnetische Fluss auf die verbliebenen Auflagebereiche, an denen der Permanentmagnet 3 auf dem Trägerelement 15 aufliegt und an denen das Trägerelement 15 auf dem Rotorkörper 4 aufliegt, aus und verläuft hauptsächlich in diesen Bereichen. In FIG 6 sind der Übersichtlichkeit halber nur die beiden Auflagebereiche 14' und 14" mit Bezugszeichen versehen. Hierdurch werden die zwischen dem Permanentmagnet 3 und dem Trägerelement 15 sowie die zwischen dem Trägerelement 15 und dem Rotorkörper 4 wirkenden magnetischen Haltekräfte, d.h. magnetischen Anziehungskräfte, signifikant erhöht.

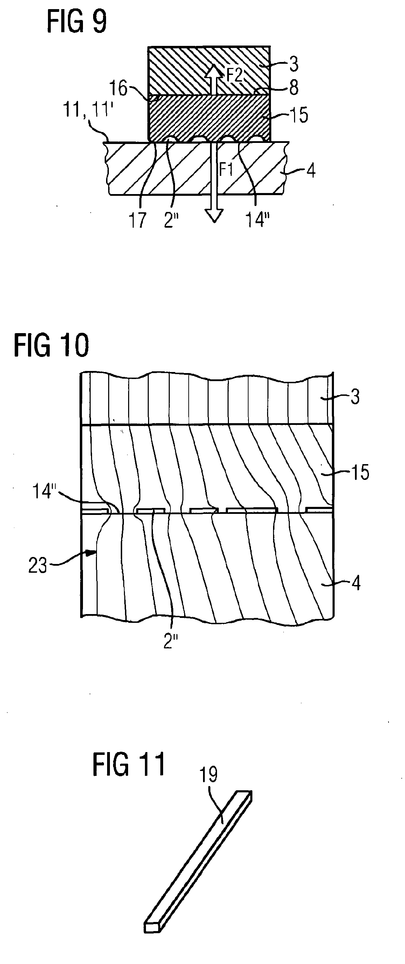

In FIG 7 ist eine weitere Ausbildung der Erfindung dargestellt, die eine Variante der Ausbildung der Erfindung gemäß FIG 6 darstellt. Gleiche Elemente sind in FIG 7 mit den gleichen Bezugszeichen versehen wie in FIG 6. Bei der Ausbildung der Erfindung gemäß FIG 7 sind die Ausnehmungen nur an der dem Rotorkörper 4 zugewandten Seite 17 der Trägerelemente vorhanden. In FIG 9 sind die zu der Ausbildung der Erfindung gemäß FIG 7 zugehörigen magnetischen Haltekräfte F1 und F2 dargestellt. Der Permanentmagnet 3 zieht das ferromagnetische Trägerelement 15 mit der Haltekraft F2 an, während das ferromagnetische Trägerelement 15 mit einer gegenüber der Haltekraft F2 wesentlich größeren magnetischen Haltekraft F1 am Rotorkörper 4 gehalten wird. Durch entsprechende Variation der Anzahl und Ausgestaltung der Ausnehmungen lässt sich das Kräfteverhältnis von F1 zu F2 gezielt beeinflussen.

In FIG 8 ist eine weitere Ausbildung der Erfindung dargestellt, die eine weitere Variante der Ausbildung der Erfindung gemäß FIG 6 darstellt. Gleiche Elemente sind in FIG 8 mit den gleichen Bezugszeichen versehen wie in FIG 6. Bei der Ausbildung der Erfindung gemäß FIG 8 sind die Ausnehmungen nur an der dem Rotorkörper 4 abgewandten Seite 16 der Trägerelemente vorhanden.

Es sei an dieser Stelle angemerkt, dass die dem Umfang des Rotorkörpers zugewandte Seite der Trägerelemente auch nur eine einzelne Ausnehmung aufweisen kann und/oder die dem Umfang des Rotorkörpers abgewandte Seite der Trägerelemente auch nur eine einzelne Ausnehmung aufweisen kann.

In FIG 10 ist ein magnetisches Feldlinienbild der sich im Falle des Ausführungsbeispiels gemäß der FIG 7 ausbildenden magnetischen Feldlinien 23 dargestellt. Gleiche Elemente sind in FIG 10 mit den gleichen Bezugszeichen versehen wie in FIG 7. Wie deutlich zu sehen ist, verlaufen die magnetischen Feldlinien 23 im Wesentlichen an den auftretenden Auflageflächen zwischen dem Trägerelement 15 und dem Rotorkörper 4 und verlaufen nur in einem geringen Maß durch die Ausnehmungen hindurch, da in den Ausnehmungen der magnetische Widerstand stark erhöht ist.

Bei den Ausbildungen der Erfindung gemäß FIG 6 bis FIG 10 und FIG 12 und FIG 13 sind die Ausnehmungen zwischen den Permanentmagneten und dem Rotorkörper 4 angeordnet. Weiterhin weisen die Ausnehmungen dabei vorzugsweise eine derartige Größe auf, dass infolge der Ausnehmungen die Auflagefläche, mit der die Trägerelemente 15 jeweilig auf dem Rotorkörper 4 aufliegen, zwischen 20% und 85% der Seitenfläche der dem Umfang 11 oder 11' des Rotorkörpers 4 zugewandten Seite 17 der Trägerelemente 15 beträgt, und/oder eine derartige Größe auf, dass infolge der Ausnehmungen die Auflagefläche, mit der die Permanentmagnete 3 jeweilig auf den Trägerelementen 15 aufliegen, zwischen 20% und 85% der Seitenfläche der dem Umfang 11 oder 11' des Rotorkörpers 4 abgewandten Seite 16 der Trägerelemente beträgt. Eine besonders große Erhöhung der magnetischen Haltekraft wird erreicht, wenn die Ausnehmungen eine derartige Größe aufweisen, dass infolge der Ausnehmungen die Auflagefläche, mit der die Trägerelemente 15 jeweilig auf dem Rotorkörper 4 aufliegen, zwischen 45% und 55% der Seitenfläche der dem Umfang 11 oder 11' des Rotorkörpers 4 zugewandten Seite 17 der Trägerelemente 15 beträgt, und/oder eine derartige Größe aufweisen, dass infolge der Ausnehmungen die Auflagefläche, mit der die Permanentmagnete 3 jeweilig auf den Trägerelementen 15 aufliegen, zwischen 45% und 55% der Seitenfläche der dem Umfang 11 oder 11' des Rotorkörpers 4 abgewandten Seite 16 der Trägerelemente beträgt. In FIG 16 ist im Rahmen einer schematisierten Ansicht die Seitenfläche der dem Umfang des Rotorkörpers zugewandten oder abgewandten Seite der Trägerelemente dargestellt. Die Seitenfläche ist die von dem dick gezeichneten Rechteck umrandete Fläche. Die in FIG 16 punktiert dargestellten Flächen der Seitenfläche stehen infolge der Ausnehmungen nicht mehr als Auflagefläche zu Verfügung. Die Auflagefläche entspricht der Seitenfläche abzüglich der punktiert dargestellten Flächen. Die Auflagefläche ist in FIG 16 schraffiert dargestellt.

Durch die erfindungsgemäße Realisierung der Ausnehmungen wird gegenüber ebenen durchgehenden Auflageflächen eine starke Erhöhung der magnetischen Haltekräfte erzielt, so dass auf die aus dem Stand der Technik bekannten mechanische Befestigungsmittel, bei denen z.B. mittels Schrauben, Nuten und formschlüssigen Verbindungen die Permanentmagnete am Rotorkörper befestigt sind, verzichtet werden kann. Die Permanentmagnete sind somit ausschließlich durch die von ihnen erzeugten magnetischen Haltekräfte mit dem Rotorkörper 4 verbunden und werden solchermaßen ausschließlich durch die von ihnen erzeugten magnetischen Haltekräfte am Rotorkörper 4 gehalten.

Im Falle der Verwendung der beschriebenen ferromagnetischen Trägerelemente werden die magnetischen Haltekräfte dabei durch die Trägerelemente verstärkt. Die Trägerelemente können z.B. aus einer ferromagnetischen Eisenlegierung bestehen.

Insbesondere wenn die Ausnehmungen in Form von Nuten ausgebildet sind, wird durch die Erfindung eine leichte spätere Demontage der Permanentmagnete, z.B. zu Wartungszwecken, ermöglicht. Es müssen hierzu lediglich temporär zur Demontage ferromagnetische Stangen, d.h. Stangen, die aus einem ferromagnetischen Material, wie z.B. einer ferromagnetischen Eisenlegierung, bestehen, in die Nuten eingeführt werden. In FIG 11 ist beispielhaft eine solche Stange 19 dargestellt. Die äußere Form der Stange 19 ist dabei an die Form der Nut und der durch die Nut und die Oberfläche des Permanentmagneten oder des Rotorkörpers gebildeten Kanäle angepasst, insbesondere formschlüssig angepasst. Wenn die Stangen in die Nuten eingeführt werden, verringert sich der magnetische Widerstand in den Nuten, wodurch sich der magnetische Fluss zum Teil in die von Stangen ausgefüllten Nuten umverteilt. Die auftretenden magnetischen Haltekräfte entsprechen dann wieder den magnetischen Haltekräften, die an einer ebenen durchgehenden Auflagefläche zwischen den Elementen entstehen würden. Wie schon gesagt gehen die magnetischen Haltekräfte zwischen den jeweilig anziehenden Elementen (Permanentmagnete, Trägerelemente, Rotorkörper) infolge des nun wieder gleichmäßig verteilten magnetischen Flusses stark zurück, so dass die Permanentmagnete und/oder die Trägerelemente mit einfachen Hilfsmitteln, wie z.B. Keilen, leicht und schnell wieder gelöst werden können. Es können dabei z.B. mehrere Stangen zu einem Schieber verbunden werden, so dass die Permanentmagnete besonders leicht und schell wieder vom Rotorkörper, durch Einschieben des Schiebers in die Nuten, gelöst werden können.

Falls die von den Permanentmagneten erzeugten magnetischen Haltekräfte (Anziehungskräfte) nicht ausreichend sein sollten, um ein sicheres Halten der Permanentmagnete am Rotorkörper sicher zu stellen, können die Haltekräfte zusätzlich erhöht werden, indem an den Auflageflächen zwischen den Permanentmagneten und dem Rotorkörper oder zwischen den Permanentmagneten und den Trägerelementen und/oder zwischen den Trägerelementen und dem Rotorkörper eine Klebeschicht aufgetragen wird, so dass die Permanentmagnete zusätzlich zur magnetischen Halteverbindung durch eine Klebeverbindung am Rotorkörper gehalten werden. Die Permanentmagnete werden in diesem Fall ausschließlich über magnetische Haltekräfte und vom Kleber erzeugte Klebekräfte am Rotorkörper gehalten.

Es sei an dieser Stelle angemerkt, dass es aber auch möglich ist, zusätzlich zu der magnetischen Verbindung und gegebenenfalls vorhandenen Klebeverbindung, die Permanentmagnete mit zusätzlichen mechanischen Befestigungsmitteln am Rotorkörper zu befestigen um so ein extrem sicheres Halten der Permanentmagnete am Rotorkörper sicher zu stellen.

Weiter sei an dieser Stelle angemerkt, dass die elektrische Maschine vorzugsweise eine elektrische Leistung, die größer als 1 MW ist, aufweist.

Des Weiteren sei angemerkt, dass die dem Umfang des Rotorkörpers zugewandte Seite der Permanentmagnete oder die dem Umfang des Rotorkörpers zugewandte und/oder abgewandte Seite der Trägerelemente nicht unbedingt wie in Ausführungsbeispielen dargestellt eben sein müssen, sondern z.B. auch entsprechend der Krümmung des Umfangs gekrümmt sein können.

Weiterhin sei angemerkt, dass die Permanentmagnete nicht unbedingt einstückig ausgebildet sein müssen, sondern dass diese auch in Form von mehreren zu einem größeren Permanentmagneten zusammengefügten Permanentmagneten vorliegen können. So sind z.B. in FIG 14 mehrere Permanentmagnete in Richtung der Rotationsachse R hintereinander angeordnet und bilden einen solchen größeren Permanentmagneten. Die Permanentmagnete können weiterhin auch parallel nebeneinander (z.B. wie in FIG 1 dargestellt) angeordnet sein.

## Patentansprüche

1. Rotor für eine elektrische Maschine (1), wobei der Rotor (5) einen Rotorkörper (4) aufweist, wobei am Umfang (11,11') des Rotorkörpers (4) Permanentmagnete (3) angeordnet sind, wobei die von den Permanentmagneten (3) abgedeckten Bereiche (22) des Umfangs (11,11') des Rotorkörpers (4) mindestens eine Ausnehmung (2) aufweisen und/oder die dem Umfang (11,11') des Rotorkörpers (4) zugewandte Seite (8) der Permanentmagnete (3) mindestens eine Ausnehmung (2) aufweist, wobei infolge der Ausnehmungen die Auflagefläche, mit der die Permanentmagnete (3) jeweilig auf dem Rotorkörper (4) aufliegen, zwischen 20% und 85% der Seitenfläche der dem Umfang (11,11') des Rotorkörpers (4) zugewandten Seite (8) der Permanentmagnete beträgt, wobei die Ausnehmung (2) in Form einer Nut realisiert ist, wobei die Richtung der Nut parallel zur der dem Umfang (11,11') des Rotorkörpers (4) zugewandten Seite (8) der Permanentmagneten (3) verläuft, **dadurch gekennzeichnet, dass** in die Ausnehmungen (2) zur Demontage der Permanentmagnete (3) temporär ferromagnetische Stangen (19) einführbar sind.

2. Rotor nach Anspruch 1, **dadurch gekennzeichnet, dass** infolge der Ausnehmungen die Auflagefläche, mit der die Permanentmagnete (3) jeweilig auf dem Rotorkörper (4) aufliegen, zwischen 45% und 55% der Seitenfläche der dem Umfang (11,11') des Rotorkörpers (4) zugewandten Seite (8) der Permanentmagnete (3) beträgt.

3. Rotor für eine elektrische Maschine, wobei der Rotor einen Rotorköper (4) aufweist, wobei am Umfang (11,11') des Rotorkörpers (4) ferromagnetische Trägerelemente (15) angeordnet sind, wobei an der dem Umfang (11,11') des Rotorkörpers (4) abgewandten Seite (16) der Trägerelemente (15) mindestens ein Permanentmagnet (3) angeordnet ist, wobei die dem Umfang (11,11') des Rotorkörpers (4) zugewandte Seite (17) der Trägerelemente (15) mindestens eine Ausnehmung (2") aufweist und/oder die dem Umfang (11,11') des Rotorkörpers (4) abgewandte Seite (16) der Trägerelemente (15) mindestens eine Ausnehmung (2') aufweist, wobei infolge der Ausnehmungen (2") die Auflagefläche, mit der die Trägerelemente (15) jeweilig auf dem Rotorkörper (4) aufliegen, zwischen 20% und 85% der Seitenfläche der dem Umfang (11,11') des Rotorkörpers (4) zugewandten Seite (17) der Trägerelemente (15) beträgt und/oder infolge der Ausnehmungen (2') die Auflagefläche, mit der die Permanentmagnete (3) jeweilig auf den Trägerelementen (15) aufliegen, zwischen 20% und 85% der Seitenfläche der dem Umfang (11,11') des Rotorkörpers (4) abgewandten Seite (16) der Trägerelemente (15) beträgt, wobei die Ausnehmungen (2',2") in Form einer Nut realisiert sind, wobei die Richtung der Nut parallel zur der dem Umfang (11,11') des Rotorkörpers (4) zugewandten Seite (8) der Permanentmagneten (3) verläuft, **dadurch gekennzeichnet, dass** in die Ausnehmungen (2',2") zur Demontage der Permanentmagnete (3) temporär ferromagnetische Stangen (19) einführbar sind.

4. Rotor nach Anspruch 3, **dadurch gekennzeichnet, dass** infolge der Ausnehmungen (2") die Auflagefläche, mit der die Trägerelemente (15) jeweilig auf dem Rotorkörper (4) aufliegen, zwischen 45% und 55% der Seitenfläche der dem Umfang (11,11') des Rotorkörpers (4) zugewandten Seite (17) der Trägerelemente (15) beträgt und/oder dass infolge der Ausnehmungen (2') die Auflagefläche, mit der die Permanentmagnete (3) jeweilig auf den Trägerelementen (15) aufliegen, zwischen 45% und 55% der Seitenfläche der dem Umfang (11,11') des Rotorkörpers (4) abgewandten Seite (16) der Trägerelemente (15) beträgt.

5. Rotor nach einem der vorhergehenden Ansprüche, d a**durch gekennzeichnet** , dass die Nut eine quadratische, rechteckförmige, runde, trapezförmige oder v-förmige Form aufweist.

6. Elektrische Maschine, wobei die Maschine als Elektromotor oder Generator ausgebildet ist, wobei die Maschine einen Rotor nach einem der Ansprüche 1 bis 5 aufweist.

7. Elektrische Maschine nach Anspruch 6, **dadurch gekennzeichnet, dass** der Generator als Windkraftgenerator ausgebildet ist.

## Claims

1. Rotor for an electrical machine (1), wherein the rotor (5) has a rotor body (4), wherein permanent magnets (3) are arranged on the circumference (11, 11') of the rotor body (4), wherein the areas (22) of the circumference (11, 11') of the rotor body (4) which are covered by the permanent magnets (3) have at least one recess (2) and/or the side (8) of the permanent magnets (3) which faces the circumference (11, 11') of the rotor body (4) has at least one recess (2), wherein, as a result of the recesses, the contact area with which the permanent magnets (3) rest on the rotor body (4) in each case is between 20% and 85% of the side area of the side (8) of the permanent magnets which faces the circumference (11, 11') of the rotor body (4), wherein the recess (2) is realised in the form of a slot, wherein the direction of the slot runs parallel to the side (8) of the permanent magnets (3) which faces the circumference (11, 11') of the rotor body (4), **characterised in that** temporary ferromagnetic bars (19) can be inserted in the recesses (2) in order to remove the permanent magnets (3).

2. Rotor according to claim 1, **characterised** i n **that,** as a result of the recesses, the contact surface with which the permanent magnets (3) rest on the rotor body (4) in each case is between 45% and 55% of the side area of the side (8) of the permanent magnets (3) which faces the circumference (11, 11') of the rotor body (4).

3. Rotor for an electrical machine, wherein the rotor has a rotor body (4), wherein ferromagnetic carrier elements (15) are arranged on the circumference (11, 11') of the rotor body (4), wherein at least one permanent magnet (3) is arranged on the side (16) of the carrier elements (15) which faces away from the circumference (11, 11') of the rotor body (4), wherein the side (17) of the carrier elements (15) which faces the circumference (11, 11') of the rotor body (4) has at least one recess (2") and/or the side (16) of the carrier elements (15) which faces away from the circumference (11, 11') of the rotor body (4) has at least one recess (2'), wherein, as a result of the recesses (2"), the contact surface with which the carrier elements (15) rest on the rotor body (4) in each case is between 20% and 85% of the side area of the side (17) of the carrier elements (15) which faces the circumference (11, 11') of the rotor body (4) and/or that, as a result of the recesses (2'), the contact surface with which the permanent magnets (3) rest on the carrier elements (15) in each case is between 20% and 85% of the side surface of the side (16) of the carrier elements (15) which faces away from the circumference (11, 11') of the rotor body (4), wherein the recesses (2', 2") are realised in the form of a slot, wherein the direction of the slot runs parallel to the side (8) of the permanent magnets (3) which faces the circumference (11, 11') of the rotor body (4), **characterised in that** temporary ferromagnetic bars (19) can be inserted in the recesses (2', 2") in order to remove the permanent magnets (3).

4. Rotor according to claim 3, **characterised** i n **that,** as a result of the recesses (2"), the contact surface with which the carrier elements (15) rest on the rotor body (4) in each case is between 45% and 55% of the side area of the side (17) of the carrier elements (15) which faces the circumference (11, 11') of the rotor body (4) and/or that, as a result of the recesses (2'), the contact surface with which the permanent magnets (3) rest on the carrier elements (15) in each case is between 45% and 55% of the side surface of the side (16) of the carrier elements (15) which faces away from the circumference (11, 11') of the rotor body (4).

5. Rotor according to one of the preceding claims, **characterised in that** the slot has a square, rectangular, round, trapezoidal or V-shaped form.

6. Electrical machine, wherein the machine is designed as an electric motor or generator, wherein the machine has a rotor as claimed in one of claims 1 to 5.

7. Electrical machine according to claim 6, **characterised in that** the generator is designed as a wind turbine generator.

## Revendications

1. Rotor pour une machine (1) électrique, le rotor (5) ayant un corps (4) de rotor, des aimants (3) permanents étant disposés sur le pourtour (11, 11') du corps (4) du rotor, les parties (22) du pourtour (11, 11') du corps (4) du rotor recouvertes par les aimants (3) permanents ayant au moins un évidemment (2) et/ou le côté (8), tourné vers le pourtour (11, 11') du corps (4) du rotor, des aimants (3) permanents ayant au moins un évidemment (2), dans lequel, en raison des évidements, la surface d'application par laquelle les aimants (3) permanents s'appliquent respectivement au corps (4) du rotor représente entre 20 % et 80 % de la surface latérale du côté (8), tourné vers le pourtour (11, 11') du corps (4) du rotor, des aimants permanents, les évidements (2) étant réalisés sous la forme d'une rainure, la direction de la rainure étant parallèle au côté (8), tourné vers le pourtour (11, 11') du corps (4) du rotor, des aimants (3) permanents, **caractérisé en ce que** des barreaux (19) ferromagnétiques temporairement peuvent, pour le démontage des aimants (3) permanents, être introduits dans les évidements (2).

2. Rotor suivant la revendication 1, **caractérisé en ce qu'**en raison des évidements la surface d'application, par laquelle les aimants (3) permanents s'appliquent respectivement au corps (4) du rotor, représente entre 45 % et 55 % de la surface latérale du côté (8), tourné vers le pourtour (11, 11') du corps (4) du rotor, des aimants (3) permanents.

3. Rotor pour une machine électrique, le rotor ayant un corps (4) de rotor, des éléments (15) de support ferromagnétiques étant disposés sur le pourtour (11, 11') du corps (4) du rotor, au moins un aimant (3) permanent étant disposé sur le côté (16), éloigné du pourtour (11, 11') du corps (4) du rotor, des éléments (15) de support, le côté (17), tourné vers le pourtour (11, 11') du corps (4) du rotor, des éléments (15) de support ayant au moins un évidement (2") et/ou le côté (16), éloigné du pourtour (11, 11') du corps (4) du rotor, des éléments (15) de support ayant au moins un évidemment (2'), dans lequel en raison des évidements (2") la surface d'application, par laquelle les éléments (15) de support s'appliquent respectivement au corps (4) du rotor représentent entre 20 % et 85 % de la surface latérale du côté (17), tourné vers le pourtour (11, 11') du corps (4) du rotor, des éléments (15) de support et/ou en raison des évidements (2') la surface d'application, par laquelle les aimants (3) permanents s'appliquent respectivement aux éléments (15) de support représente entre 20 % et 85 % de la surface latérale du côté (16), éloigné du pourtour (11, 11') du corps (4) du rotor, des éléments (15) de support, les évidements (2', 2") étant réalisés sous la forme d'une rainure, la direction de la rainure étant parallèle au côté (8), tourné vers le pourtour (11, 11') du corps (4) du rotor, des aimants (3) permanents, **caractérisé en ce que** des barreaux (19) ferromagnétiques temporairement peuvent, pour le démontage des aimants (3) permanents, être introduits dans les évidements (2).

4. Rotor suivant la revendication 3, **caractérisé en ce qu'**en raison des évidements (2") la surface d'application, par laquelle les éléments (15) de support s'applique respectivement au corps (4) du rotor, représente entre 45 % et 55 % de la surface latérale du côté (17), tourné vers le pourtour (11, 11') du corps (4) du rotor, des éléments (15) de support et/ou **en ce qu'**en raison des évidements (2') la surface d'application, par laquelle les aimants (3) permanents s'appliquent respectivement aux éléments (15) de support, représente entre 40 % et 55 % de la surface latérale du côté (16), éloigné du pourtour (11, 11') du corps (4) du rotor, des éléments (15) de support.

5. Rotor suivant l'une des revendications précédentes, **caractérisé en ce que** la rainure a une forme carrée, rectangulaire, circulaire, trapézoïdale ou en v.

6. Machine électrique dans laquelle la machine est constituée en moteur électrique ou en génératrice, la machine ayant un rotor suivant l'une des revendications 1 à 5.

7. Machine électrique suivant la revendication 6, **caractérisée en ce que** la génératrice est constituée sous la forme d'une éolienne.
